# EUROPÄISCHE PATENTSCHRIFT

(11) **EP 2 139 935 B1**
(45) Veröffentlichungstag und Bekanntmachung des Hinweises auf die Patenterteilung: **01.12.2010**
(21) Anmeldenummer: 08717829.9
(22) Anmeldetag: 14.03.2008
(51) Int. Cl.: C08G 18/09, C08G 18/22, C08G 18/28, C08G 18/70, C09D 175/04

(54) **WASSEREMULGIERBARE POLYISOCYANATE**
WATER-EMULSIFIABLE POLYISOCYANATES
POLYISOCYANATES ÉMULSIONNABLES DANS L'EAU

(30) Priorität: 26.03.2007 EP 07104873
(43) Veröffentlichungstag der Anmeldung: 06.01.2010
(73) Patentinhaber: BASF SE, 67056 Ludwigshafen (DE)
(72) Erfinder: KELLER, Peter, 66583 Spiesen-Elversberg (DE); SCHÄFER, Harald, 68219 Mannheim (DE); WAGNER, Eva, 67098 Bad Dürkheim (DE); ZECH, Thomas, 67240 Bobenheim-Roxheim (DE); STEINBRECHER, Angelika Maria, 70197 Stuttgart (DE)
(86) Internationale Anmeldenummer: PCT/EP2008/053088
(87) Internationale Veröffentlichungsnummer: WO 2008/116764

(56) Entgegenhaltungen:
- EP-A- 0 524 500
- WO-A-2005/047357
- US-A- 5 157 074

## Beschreibung

Die vorliegende Erfindung beschreibt ein Verfahren zur Herstellung von wasseremulgierbaren Polyisocyanaten.

EP 959087 A1 beschreibt die Herstellung wasseremulgierbarer Polyisocyanate durch Umsetzung von aus mindestens zwei Diisocyanatmolekülen bestehenden Polyisocyanaten mit monofunktionellen Polyethylenoxidpolyetheralkoholen (Absatz [0017]). In jedem Fall (siehe Absatz [0042]) wird jedoch ein getrennt hergestelltes Polyisocyanat mit der emulgierend wirkenden Komponente umgesetzt.

Nachteilig an einer solchen Verfahrensführung ist, daß eine derartige Herstellung aufwendig über zwei Reaktionsstufen geht.

EP 524500 A1 beschreibt die Herstellung von Polyisocyanaten, die Isocyanurat- und Allophanatgruppen enthalten. Zur Herstellung allophanatgruppenhaltiger Polyisocyanate wird die Reaktion in Gegenwart von Monoalkoholen durchgeführt, bei welchen es sich, unter mehreren Möglichkeiten, auch um Polyalkylenglykole handeln kann. Auf S.5, Z. 39 bis 45 werden verschiedene Methoden zur Herstellung solcher Polyisocyanate beschrieben: Demnach kann 1) zunächst ein Diisocyanat mit dem Monoalkohol unter Bildung von Urethangruppen vorreagiert werden und anschließend die eigentliche Polyisocyanatbildung erfolgen oder 2) der Monoalkohol kann mit Diisocyanat vermischt werden und anschließend zum Polyisocyanat umgesetzt werden oder 3) der Monoalkohol kann vor oder nach, bevorzugt nach der Umsetzung des Diisocyanats zum Polyisocyanat zugegeben werden oder 4) der Katalysator zur Herstellung der Polyisocyanat kann in Monoalkohol gelöst werden oder 5) man kann Polyisocyanat und Monoallophanat miteinander vermischen.

Das Erfindungsprinzip wird auf S.5, Z. 9 - 10 so beschrieben, daß mit einem Monoalkohol in ein Polyisocyanat Urethangruppen eingeführt werden und diese anschließend in Allophanatgruppen überführt werden. Dies entspricht der Alternative 3), bei der erst Monoalkohol nach der Umsetzung zum Polyisocyanat zugegeben wird.

In allen explizit offenbarten Beispielen 1 bis 7 wird dagegen zunächst Diisocyanat mit Monoalkohol zum Urethan umgesetzt (Präurethanisierung) und das so erhaltene Reaktionsgemisch anschließend oligomerisiert (Alternative 1).

Auch die in den Beispielen 4, 5 und 7 explizit offenbarten Ausführungsbeispiele, in denen es sich bei den Monoalkoholen um Polyethylenglykole handelt, folgen der Alternative 1, bei denen der eingesetzte Monoalkohol zunächst mit dem monomeren Diisocyanat umgesetzt wird.

Für die anderen Alternativen fehlt sowohl eine Wertung als auch eine explizite Offenbarung.

DE-OS 38 10 908 beschreibt die Bildung von isocyanuratgruppenhaltigen Polyisocyanaten, die optional auch in Gegenwart von Alkoholen gebildet werden können (S. 6, Z. 38 bis 48). Hier erfüllt der Alkohol jedoch lediglich die Rolle eines Co-Katalysators und wird daher nur in geringen Mengen von 0,05 bis 1 Gew% eingesetzt. Die in DE-OS 3810908 aufgelisteten Alkohole sind nicht geeignet, die zugrundeliegenden Polyisocyanate wasserdispergierbar zu modifizieren, da sie nicht hydrophil genug sind und/oder mindestens difunktionell sind. Die aufgelisteten monofunktionellen Alkohole Methanol, Ethanol, Butanol und Phenol sind nicht ausreichend hydrophil und die anderen sind höherfunktionell, und führen somit zu einer Vernetzung des Polyisocyanats.

In größeren Mengen werden Alkohole, insbesondere Diole, dagegen als Edukte eingesetzt. Hier wird lediglich ein Präurethanisierungsverfahren offenbart (S. 6, Z. 42 - 48 und Beispiel 3).

Wasseremulgierbare Polyisocyanate mit emulgierend wirkenden Monoalkoholen werden dagegen gar nicht offenbart.

DE 102004015983 A1 offenbart ein Verfahren zur Herstellung von allophanatgruppenhaltigen Polyisocyanaten. Als Alkohole werden jedoch lediglich solche mit einer mittleren Funktionalität > 1,5 offenbart (Absatz [0013]) und es wird lediglich ein Präurethanisierungsverfahren offenbart (Absätze [0024] und [0025]), bei dem die Urethanbildung getrennt von der Allophanatbildung erfolgt.

EP 56159 A beschreibt die Oligomerisierung von Diisocyanaten in Gegenwart von basischen Alkalimetallkatalysatoren, die als Komplex mit einem Polyalkylenoxid vorliegen. Bei letzteren kann es sich gemäß der explizit offenbarten Beispiele um unveretherte, einfach oder vollständig veretherte alkoxylierte Di- oder Polyole handeln. Die Menge an Alkoholen bzw. Komplexbildner darf nach der Lehre der EP 56159 A1 maximal 2 mol% bzgl. der eingesetzten Isocyanatgruppen betragen (Seite 12, Zeile 23). Weder reicht diese Menge zur Herstellung wasserdispergierbarer Polyisocyanate aus noch gibt EP 56159 A einen Hinweis auf eine derartige Herstellung wasserdispergierbarer Polyisocyanate.

Im Gegenteil wird auf Seite 11, Zeile 30 f. ausgeführt, daß man die Menge an Polyalkylenoxid und Alkohol gezielt so wählt, daß der Einfluß auf das Produkt vernachlässigbar ist. Offenbart wird lediglich die Verwendung von Polyalkylenoxiden als Komplexbildner für basische Alkalimetallkatalysatoren.

Zudem bezieht sich die Angabe "maximal 2 mol%" auf die Summe aus einwertigen Alkoholen als Lösungsmittel und Polyalkylenoxiden als Komplexbildnern. In den explizit offenbarten Beispielen wird jedoch wesentlich weniger monofunktionelles Polyalkylenoxid pro Diisocyanat eingesetzt: Beispiel 12: 0,023 mol%; Beispiel 14: 0,019 mol%; Beispiel 20: 0,12 mol%.

Die Aufgabe der vorliegenden Erfindung bestand darin, wasseremulgierbare Polyisocyanate zur Verfügung zu stellen, die mindestens einen der folgenden Vorteile zeigen sollen: geringe Viskosität, geringe Farbzahl, gute Dispergierbarkeit und hoher Gehalt an NCO-Gruppen bei vergleichbarer Dispergierbarkeit wie andere wasseremulgierbare Polyisocyanate.

Die Aufgabe wurde gelöst durch wasseremulgierbare Polyisocyanate erhalten durch ein Verfahren zur Herstellung von wasseremulgierbaren, isocyanuratgruppenhaltigen Polyisocyanaten, in dem man
(A) mindestens ein (cyclo)aliphatisches Diisocyanat,
(B) gegebenenfalls mindestens ein weiteres Diisocyanat, das ein anderes als (A) ist, und
(C) mindestens einen alkoxylierten Monoalkohol
gleichzeitig in Gegenwart mindestens eines Katalysators (D), der die Bildung von Isocyanuratgruppen aus Isocyanatgruppen zu beschleunigen vermag, miteinander umsetzt, die Umsetzung bei Erreichen des gewünschten Umsatzes stoppt und das unumgesetzte Diisocyanat (A) sowie gegebenenfalls (B) aus dem Reaktionsgemisch abtrennt, wobei die Menge an alkoxyliertem Monoalkohol (C) nach Ende der Umsetzung und Abtrennung von unumgesetzten (A) sowie gegebenenfalls (B) mindestens 1,0 mol% bezogen auf Hydroxygruppen im Verhältnis zur Summe aller NCO-Gruppen aus den Komponenten (A) und (B) beträgt.

Die so erhaltenen wasseremulgierbaren Polyisocyanate weisen bei guter Wasseremulgierbarkeit einen höheren NCO-Gehalt als vergleichbar gut wasseremulgierbare Polyisocyanate auf. Des weiteren zeigen die erfindungsgemäß erhaltenen wasseremulgierbaren Polyisocyanate eine niedrigere Viskosität verglichen mit solchen Produkten, bei denen bei vergleichbaren Umsätzen die Umsetzung mit einem alkoxylierten Monoalkohol erst nach der Isocyanuratbildung erfolgt (siehe Vergleichsbeispiel 4). Anders formuliert kann man zur Erreichung von Produkten mit gleicher Viskosität durch die erfindungsgemäße gleichzeitige Umsetzung höhere Umsätze bezüglich der Bildung von Isocyanuratgruppen im Herstellverfahren einstellen, als bei den Verfahren aus dem Stand der Technik. Andererseits zeigen die erfindungsgemäß erhaltenen Produkte verglichen mit solchen Produkten, die man zunächst mit dem alkoxylierten Monoalkohol (C) umsetzt und erst anschließend die Isocyanurate bildet (Vergleichsbeispiel 2) eine verbesserte Dispergierbarkeit.

Bei der Komponente (A) handelt es sich um ein (cyclo)aliphatisches Diisocyanat.

Der Begriff "(cyclo)aliphatisch" wird in dieser Schrift kurz für aliphatisch oder cycloaliphatisch verwendet, bevorzugt für aliphatisch.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den (cyclo)aliphatischen Diisocyanaten (A) handelt es sich bevorzugt um Isocyanate mit 4 bis 20 C-Atomen. Beispiele für übliche aliphatische Diisocyanate sind Tetramethylendiisocyanat, 1,5-Pentamethylendiisocyanat, 2-Methyl-1,5-pentandiisocyanat, Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate sind beispielsweise 1,4-, 1,3- oder 1,2-Diisocyanatocyclohexan, Isophorondiisocyanat, 4,4'-oder 2,4'-Di(isocyanatocyclohexyl)methan, 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugt handelt es sich bei Diisocyanaten (A) um mindestens ein Diisocyanat ausgewählt aus der Gruppe bestehend aus 1,6-Hexamethylendiisocyanat (HDI), Isophorondiisocyanat (IPDI) 4,4'- und 2,4'-Di(isocyanatocyclohexyl)methan.

Ganz besonders bevorzugt ist das Diisocyanat ausgewählt aus der Gruppe bestehend aus 1 ,6-Hexamethylendiisocyanat (HDI) und Isophorondiisocyanat (IPDI), insbesondere handelt es sich um 1,6-Hexamethylendiisocyanat.

Es können ein oder mehrere Diisocyanate (A) umgesetzt werden, beispielsweise ein bis drei, bevorzugt ein oder zwei und besonders bevorzugt genau ein Diisocyanat (A).

Es spielt erfindungsgemäß eine untergeordnete Rolle, nach welchem Verfahren das Diisocyanat (A) oder (B) erhalten worden ist und in welcher Reinheit es in das erfindungsgemäße Verfahren eingesetzt wird.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Solche phosgenfreien Verfahren sind beispielsweise beschrieben in EP-A-0 126 299 (US 4 596 678), EP-A-126 300 (US 4 596 679) und EP-A-355 443 (US 5 087 739). Die Diisocyanate werden hergestellt durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was z.B. in Elektronikanwendungen erwünscht ist.

In einer Ausführungsform der vorliegenden Erfindung weisen die Diisocyanate (A) sowie gegebenenfalls (B) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate (A) sowie gegebenenfalls (B) mit einem höheren Chlorgehalt eingesetzt werden, beispielsweise bis zu 500 ppm.

Selbstverständlich können auch Gemische aus solchen Diisocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, verwendet werden.

Der Gehalt an isomeren Verbindungen im Diisocyanat (A) spielt erfindungsgemäß keine entscheidende Rolle.

So kann 1,6-Hexamethylendiisocyanat beispielsweise einen geringen Anteil an 2- und/oder 3-Methyl-1,5-pentamethylendiisocyanat enthalten.

1-Isocyanato-3,3,5- trimethyl-5-(isocyanatomethyl)cyclohexan (Isophorondiisocyanat, IPDI) liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Bei der Komponente (B) kann es sich um mindestens ein anderes Isocyanat als (A) handeln, beispielsweise um aromatische oder araliphatische Isocyanate (B), bevorzugt aromatische Isocyanate (B) handeln.

Aromatische Isocyanate sind solche, die mindestens ein aromatisches Ringsystem enthalten.

Araliphatische Isocyanate sind solche, die einen aromatischen Ring enthalten, mit daran über aliphatische Ketten gebundenen Isocyanatgruppen.

Bei den Isocyanaten (B) handelt es sich bevorzugt um Diisocyanate, die genau zwei Isocyanatgruppen tragen. Es kann sich aber prinzipiell auch um Monoisocyanate mit genau einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Bei den Diisocyanaten (B) handelt es sich bevorzugt um Isocyanate mit 4 bis 20 C-Atomen. Beispiele für aromatische Diisocyanate sind 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Besonders bevorzugt als Diisocyanate (B) sind 2,4- oder 2,6-Toluylendiisocyanat und deren Isomerengemische und Tetramethylxylylendiisocyanat, ganz besonders bevorzugt sind 2,4- oder 2,6-Toluylendiisocyanat und deren Isomerengemische.

Es können auch Gemische der genannten Isocyanate vorliegen.

Bei der Komponente (C) handelt es sich um monofunktionelle Polyalkylenoxidpolyetheralkohole, die Umsetzungsprodukte von geeigneten Startermolekülen mit Polyalkylenoxiden sind.

Geeignete Startermoleküle zur Herstellung einwertiger Polyalkylenoxidpolyetheralkohole sind Thiolverbindungen, Monohydroxyverbindungen der allgemeinen Formel

R¹-O-H

oder sekundäre Monoamine der allgemeinen Formel

R²R³N-H,

in welchen
R¹, R² und R³ unabhängig voneinander jeweils C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₂₀-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R¹, R² und R³ unabhängig voneinander C₁- bis C₄-Alkyl, d.h. Methyl, Ethyl, iso-Propyl, n-Propyl, n-Butyl, iso-Butyl, sek-Butyl oder tert-Butyl, besonders bevorzugt sind R¹, R² und R³ Methyl.

Beispielsweise geeignete einwertige Startermoleküle sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Beispiele für die auf Aminen gestarteten Polyether sind die sogenannten Jeffamine® M-Serien, die methylgekappte Polyalkylenoxide mit einer Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt mindestens 5 Alkylenoxideinheiten, pro Molekül auf, besonders bevorzugt mindestens 7 und ganz besonders bevorzugt mindestens 10 Alkylenoxideinheiten, insbesondere Ethylenoxideinheiten.

Die einwertigen Polyalkylenoxidpolyetheralkohole weisen im statistischen Mittel in der Regel bis zu 50 Alkylenoxideinheiten pro Molekül auf, bevorzugt bis zu 45, besonders bevorzugt bis zu 40 und ganz besonders bevorzugt bis zu 30 Alkylenoxideinheiten, insbesondere Ethylenoxideinheiten.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 250 und insbesondere 500 ± 100 g/mol.

Bevorzugte Polyetheralkohole sind somit Verbindungen der Formel

R¹-O-[-Xᵢ-]ₖ-H

worin
R¹ die oben genannten Bedeutungen hat,
k für eine ganze Zahl von 5 bis 40, bevorzugt 7 bis 20 und besonders bevorzugt 10 bis 15 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Die Herstellung der Polyalkylenoxidpolyetheralkohole erfolgt in der Regel durch Alkoxylierung der Startverbindungen in Gegenwart eine Katalysators, beispielsweise eines Alkali- oder Erdalkalihydroxids, -oxids, -carbonats oder -hydrogencarbonats.

Die Herstellung der Polyalkylenoxidpolyetheralkohole kann auch mit Hilfe von Multimetallcyanidverbindungen, häufig auch als DMC-Katalysatoren bezeichnet, erfolgen, die seit langem bekannt und vielfach in der Literatur beschrieben sind, beispielsweise in US 3,278,457 und in US 5,783,513.

Die DMC-Katalysatoren werden üblicherweise hergestellt, indem ein Metallsalz mit einer Cyanometallatverbindung umgesetzt wird. Zur Verbesserung der Eigenschaften der DMC-Katalysatoren ist es üblich, während und/oder nach der Umsetzung organische Liganden zuzusetzen. Eine Beschreibung der Herstellung von DMC-Katalysatoren findet sich beispielsweise in US-A 3,278,457.

Typische DMC-Katalysatoren weisen die folgende allgemeine Formel auf:

M¹ₐ[M²(CN)_{b}]_{d}•fM¹ⱼXₖ•h(H₂O) eL•zP

worin
M¹ ein Metallion, ausgewählt aus der Gruppe, enthaltend Zn²⁺, Fe²⁺, Fe³⁺, Co²⁺, Co³⁺, Ni²⁺, Mn²⁺, Sn²⁺, Sn⁴⁺, Pb2+, Al³⁺, Sr²⁺, Cr³⁺, Cd²⁺, Cu²⁺, La³⁺, Ce³⁺, Ce⁴⁺, Eu³⁺, Mg²⁺, Ti⁴⁺, Ag⁺, Rh²⁺, Ru²⁺, Ru³⁺, Pd²⁺
M² ein Metallion, ausgewählt aus der Gruppe, enthaltend Fe²⁺, Fe³⁺, Co²⁺, Co³⁺, Mn²⁺, Mn³⁺, Ni²⁺, Cr²⁺, Cr³⁺, Rh³⁺, Ru²⁺, Ir³⁺
bedeuten und M¹ und M² gleich oder verschieden sind,
X ein Anion, ausgewählt aus der Gruppe, enthaltend Halogenid, Hydroxid, Sulfat, Hydrogensulfat, Carbonat, Hydrogencarbonat, Cyanid, Thiocyanat, Isocyanat, Cyanat, Carboxylat, Oxalat, Nitrat oder Nitrit (NO₂⁻) oder eine Mischung von zwei oder mehr der voranstehend genannten Anionen oder eine Mischung von einem oder mehreren der voranstehend genannten Anionen mit einer der ungeladenen Spezies ausgewählt aus CO, H₂O und NO,
Y ein von X verschiedenes Anion, ausgewählt aus der Gruppe, enthaltend, Halogenid, Sulfat, Hydrogensulfat, Disulfat, Sulfit, Sulfonat (=RSO₃⁻ mit R=C1-C20-Alkyl, Aryl, C1-C20-Alkylaryl), Carbonat, Hydrogencarbonat, Cyanid, Thiocyanat, Isocyanat, Isothiocyanat, Cyanat, Carboxylat, Oxalat, Nitrat, Nitrit, Phosphat, Hydrogenphosphat, Dihydrogenphosphat, Diphosphat, Borat, Tetraborat, Perchlorat, Tetrafluoroborat, Hexafluorophosphat, Tetraphenylborat ist,
L ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide oder deren Mischungen,
P ein organischer Zusatzstoff, ausgewählt aus der Gruppe, enthaltend Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure und Maleinsäureanhydridcopolymer, Hydroxyethylcellulose, Polyacetate, ionische oberflächen und grenzflächenaktive Verbindungen, Gallensäure oder deren Salze, Ester oder Amide, Carbonsäureester mehrwertiger Alkohole und Glycoside.
sowie
a, b, d, g, n, r, s, j, k und t ganze oder gebrochene Zahlen größer null,
e, f, h und z ganze oder gebrochene Zahlen größer gleich null sind,
wobei
a, b, d, g, n, j, k und r sowie s und t so ausgewählt sind, dass die Elektroneutralität gewährleistet ist,
M³ Wasserstoff oder ein Alkali- oder Erdalkalimetall bedeuten, sowie
M⁴ Alkalimetallionen oder ein Ammoniumion (NH₄⁺) oder Alkylammoniumion (R₄N⁺, R₃NH⁺, R₂NH₂⁺, RNH₃⁺ mit R= C1-C20-Alkyl) bedeuten.

In einer besonders bevorzugten Ausführungsform der Erfindung ist M¹Zn²⁺ und M²Co³⁺ oder Co²⁺.

Die Metalle M¹ und M² sind insbesondere dann gleich, wenn sie Kobalt, Mangan oder Eisen sind.

Die Reste des Katalysators können im erhaltenen Produkt verbleiben, oder mit einer Säure, bevorzugt Salzsäure, Schwefelsäure oder Essigsäure, neutralisiert werden, wobei die Salze anschließend bevorzugt durch beispielsweise eine Wäsche oder per Ionentauscher entfernt werden können. Gegebenenfalls kann eine Teilneutralisation erfolgen und das Produkt ohne weitere Abtrennung der Salze weiterverwendet werden.

Bei dem Katalysator (D) handelt es sich erfindungsgemäß um eine solchen, der die Bildung von Isocyanuratgruppen aus Isocyanatgruppen zu beschleunigen vermag. Dabei können neben Isocyanuratgruppen auch noch weitere Polyisocyanateinheiten gebildet werden, beispielsweise Uretdion-, Biuret-, Urethan-, Allophanat-, Oxadiazintrion-, Iminooxadiazintrion-, Uretonimin- oder Carbodiimidgruppen. Bevorzugt katalysiert der Katalysator insbesondere die Bildung von Urethangruppen, dies ist jedoch für das erfindungsgemäße Verfahren nicht zwingend erforderlich.

Zu den Trimerisierungskatalysatoren, die für das erfindungsgemäße Verfahren geeignet sind, gehören zum Beispiel
- Aziridinderivate in Kombination mit tertiären Aminen des im US-Patent 3,919,218 beschriebenen Typs;
- quartäre Ammoniumcarboxylate des in den US-Patenten 4,454,317 und 4,801,663 beschriebenen Typs;
- quartäre Ammoniumphenolate mit einer zwitterionischen Struktur des im US-Patent 4,335,219 beschriebenen Typs;
- Ammoniumphosphonate und -phosphate des im US-Patent 4,499,253 beschriebenen Typs;
- Alkaliphenolate des in GB-PS 1,391,066 oder GB-PS 1,386,399 beschriebenen Typs;
- Alkalicarboxylate, beispielsweise Kobaltnaphthenat, Natriumbenzoat, Natriumacetat, Kaliumformiat und wie in DE-OS 3,219,608 beschrieben;
- basische Alkalimetallsalze, die mit acyclischen organischen Verbindungen komplexiert sind, wie sie im US-Patent 4,379,905 beschrieben sind, etwa Kaliumacetat, das mit einem Polyethylenglycol komplexiert ist, das im Mittel 5 bis 12 Ethylenoxideinheiten enthält;
- basische Alkalimetallsalze, die mit Kronenethern komplexiert sind, wie sie im US-Patent 4,487,928 beschrieben sind;
- Aminosilylgruppen enthaltende Verbindungen, wie Aminosilane, Diaminosilane, Silylharnstoffe und Silazane, wie sie im US-Patent 4,412,073 beschrieben sind;
- Gemische aus Alkalimetallfluoriden und quartären Ammonium- oder Phosphoniumsalzen, wie sie in EP-A 355479 beschrieben sind,
- tertiäre Amine, beispielsweise Triethylamin, N,N-Dimethybenzylamin, Triethylendiamin, Tris-2,4,6-(dimethylaminomethyl)-phenol und Tris-1,3,5-(dimethylaminopropyl)-S-hexahydrotriazin,
- N-heterocyclische Carbene (NHCs) wie in WO 2005/113626
- Alkalioxide, Alkalihydroxide und starke organischen Basen, wie z.B. Alkalialkoholate,
- Zinn-, Zink- bzw. Bleisalze von Alkylcarbonsäuren,
- Organische Salze der Formel (A)ₙ-R-O-CO-O^{⊖}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{⊕} in Kation, z.B. ein Alkalimetallkation oder ein quarternäres Ammoniumkation, wie Tetraalkylammonium, sowie
- quartäre Hydroxyalkylammoniumverbindungen der Formel

   R⁴,R⁵,R⁶N^{⊕}-CH₂-CH(OH)-R^{7 ⊖}O-(CO)-R⁸

   als Katalysator gemäß DE-A-26 31 733 (US-A-4 040 992).
   Besonders geeignet als Katalysatoren für das Verfahren sind quartäre Ammoniumsalze entsprechend der Formel 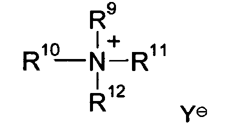 mit
   Y^{⊖}= Carboxylat (R¹³COO⁻), Fluorid (F-), Carbonat (R¹³O(CO)O⁻) oder Hydroxid (OH⁻),
   wie sie für Y⁻ = OH- im US-Patent 4,324,879 und in den Deutschen Offenlegungsschriften 2,806,731 und 2,901,479 beschrieben sind.
   Bevorzugt handelt es sich bei dem Rest Y^{⊖} um ein Carboxylat, Carbonat oder Hydroxid und besonders bevorzugt um ein Carboxylat oder Hydroxid.
   R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Unter den vorgenannten Katalysatoren sind solche für das erfindungsgemäße Verfahren weniger bevorzugt, die Metallionen enthalten, beispielsweise Alkali- oder Erdalkalimetallionen, insbesondere Alkalimetallionen.

Bevorzugte unter den aufgeführten Katalysatoren für das erfindungsgemäße Verfahren sind solche, die quartäre Ammoniumionen als Kationen aufweisen, besonders bevorzugt quartäre Ammoniumionen, die eine β-Hydroxyalkyleinheit tragen.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf-, sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Methylnaphthyl, Isopropylnaphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugte sind unabhängig voneinander die Reste R⁹ bis R¹² C₁ bis C₄-Alkyl. R¹² kann zusätzlich Benzyl sein oder ein Rest der Fomel 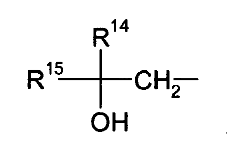 worin R¹⁴ und R¹⁵ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:

Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-10 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen oder aromatischen Kohlenwasserstoffrest und M ein Kation einer starken Base, z.B. ein Alkalimetallkation oder ein quarternäres Ammoniumkation, wie Tetraalkylammonium.

In dieser Schrift bedeuten
gegebenenfalls durch Aryl, Alkyl, Aryloxy, Alkyloxy, Heteroatome und/oder Heterocyclen substituiertes C₁-C₂₀-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, Eicosyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, E-thoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
zweiwertige C₂ bis C₉-Alkylenreste, die auch Bestandteil eines Arylen- oder Cycloalkylenrestes sein können, sind beispielsweise 1,2-Ethylen, 1,2-Propylen, 1,3-Propylen, 1,6-Hexylen, 2,2,4-Trimethylhexylen, 1,4-Cyclohexylen, Isopropyliden-1,4-dicyclohexylen, 1,2- 1,3- oder 1,4-Phenylen, 4,4'-Biphenylen, 4,4'-Bisphenylmethylen, 1,3-, 1,4- oder 1,5-Naphthylen, 3,3'-Dimethyl-4,4'-diphenylen, 3,3'-Dichlor-4,4'-diphenylen, 2,4- oder 2,6-Pyridyl, 1,4-Anthrachinondiyl, m- oder p-Toluylen, 4,6-Dimethyl-1,3-phenylen, 4,6-Dichloro-1,3-phenylen, 5-Chloro-1,3-phenylen, 5-Hydroxy-1,3-phenylen, 5-Methoxy-1,3-phenylen, 2,3-Dimethyl-1,4-phenylen m- oder p-Xylylen, Methylen-di-p-phenylen, Isopropyliden-di-p-phenylen, Thio-di-p-phenylen, Dithio-di-p-phenylen, Sulfo-di-p-phenylen, Carbonyl-di-p-phenylen, und

C₁ bis C₄-Alkyl beispielsweise Methyl, Ethyl, Propyl, Isopropyl, n-Butyl, sec-Butyl oder tert.-Butyl.

Die Herstellung dieser quartären Ammoniumkatalysatoren erfolgt in bekannter Weise durch Umsetzen eines tertiären Amins mit einem Alkylenoxid in einem wäßrigalkoholischen Medium (vgl. US-Patent 3,995,997, Spalte 2, Zeilen 19-44).

Beispiele für geeignete tertiäre Amine sind Trimethylamin, Tributylamin, 2-Dimethylaminoethanol, Triethanolamin, Dodecyldimethylamin, N,N-Dimethylcyclohexylamin, N-Methylpyrrolidin, N-Methylmorpholin und 1,4-Diazabicyclo[ 2.2.2]octan. Beispiele für geeignete Alkylenoxide sind Ethylenoxid, Propylenoxid, 1,2-Butylenoxid, Styroloxid und Methoxy-, Ethoxy- oder Phenoxypropylenoxid.

Die meistbevorzugten Katalysatoren (D) sind N,N,N,N-Tetramethylammoniumhydroxid, N,N,N,N-Tetraethylammoniumhydroxid, N,N,N,N-Tetra-n-butylammoniumhydroxid, N,N,N-Trimethyl-N-(2- hydroxyethyl)ammoniumhydroxid, N,N,N-Trimethyl-N-(2-hydroxypropyl)ammoniumhydroxid, N,N,N-Trimethyl-N-benzylammoniumhydroxid, N-(2-Hydroxypropyl)-N,N,N-trimethylammonium-2-ethylhexanoat (DABCO TMR®) und N-(2-Hydroxypropyl)-N,N,N-trimethylammonium-2-formiat (DABCO TMR®-2) der Firma Air Products.

Weiterhin bevorzugt sind solche Trimerisierungskatalysatoren wie sie bekannt sind aus der DE 10 2004 012571 A1, dort besonders Absatz [0017] bis [0027], sowie aus der EP-A1 668 271, dort besonders von S. 4, Z. 16 bis S. 6, Z. 47, was hiermit Bestandteil der vorliegenden Offenbarung sei.

Die Katalysatoren (D) werden im allgemeinen in Mengen von etwa 0,0005 bis 5 Gew.-%, vorzugsweise etwa 0,001 bis 2 Gew.-%, bezogen auf das eingesetzte Isocyanat, verwendet. Wenn beispielsweise ein bevorzugter Katalysator, wie N,N,N- Trimethyl-N-(2-hydroxypropyl)ammoniumhydroxid eingesetzt wird, sind Mengen von etwa 0,0005 bis 1 Gew.-%, vorzugsweise etwa 0,001 bis - 0,02 Gew.-%, bezogen auf das Ausgangsisocyanat, im allgemeinen ausreichend.

Die Katalysatoren können in reiner Form oder in Lösung verwendet werden. Zur besseren Handhabung kann der Katalysator in einem Lösungsmittel gelöst werden. Es eignen sich hierzu beispielsweise Alkohole, insbesondere Diole, Ketone, Ether und Ester. Die in dieser Schrift aufgeführten Lösungsmittel, die gegenüber Isocyanatgruppen inert sind, sind als Lösungsmittel geeignet, je nach dem Typ des Katalysators. Dimethylformamid oder Dimethylsulfoxid können ebenfalls als Lösungsmittel für die Katalysatoren verwendet werden.

Beispielsweise werden die oben erwähnten Katalysatoren DABCO TMR® und DABCO TMR®-2 bevorzugt als ca. 33 bis 75 Gew%ige Lösung in Diethylenglykol, Dipropylenglykol oder bevorzugt Ethylenglykol eingesetzt.

Denkbar ist auch die Verwendung von Monoalkoholen, bevorzugt Alkanolen als Lösungsmittel, beispielsweise Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol) oder 2-Ethylhexanol, in Mengen, die die Eigenschaften des Produktgemisches nicht wesentlich beeinflussen.

Weiterhin geeignet sind solche Aminosilylverbindungen, wie sie beschrieben sind in US 4,412,073, dort besonders von Spalte 3, Zeile 2 bis 33 und Spalte 4, Zeile 1 bis Spalte 6, Zeile 4, auf die hiermit im Rahmen der vorliegenden Offenbarung explizit Bezug genommen sei. Unter diesen Aminosilylverbindungen sind besonders Methylaminotrimethylsilan, Dimethylaminotrimethylsilan, Diethylaminotrimethylsilan, Dibutylaminotrimethylsilan, Diethylaminodimethylvinylsilan, Diethylamino dimethylphenylsilan, Bis (dimethylamino) dimethylsilan, Bis (diethylamino) dimethylsilan, Bis (dibutylamino) dimethylsilan, Bis (dimethylamino) methyl phenyl silan, N-Methyl-N-trimethylsilyl-N'-methyl-N'-butylharnstoff, N-Methyl-N-trimethylsilyl-N', N'-dimethylharnstoff, N-Ethyl-N-trimethylsilyl-N', N'-dimethylharnstoff und N-Butyl-N-trimethylsilyl-N', N'-dimethylharnstoff geeignet.

Ganz besonders geeignet sind Hexamethyldisilazan, Heptamethyldisilazan, Hexaethyldisilazan, 1,3-Diethyl-1,1,3,3-tetramethyldisilazan, 1,3-Divinyl-1,1,3,3-tetramethyldisilazan, 1,3-Diphenyl-1,1,3,3-tetramethyldisilazan und insbesondere Hexamethyldisilazan.

Weiterhin geeignet sind Ionische Flüssigkeiten als Katalysatoren, beispielsweise mit Cholin- oder Triazolat-Struktur, wie z.B. beschrieben in WO 2006/084880.

Weiterhin geeignet sind Hydrogen(poly)fluoride, z.B. der Zusammensetzung [M(nF-(HF)ₘ)], wobei M ein n-fach geladenes Kation bzw. ein n-wertiger Rest ist, wie Tetraorganyl-ammonium bzw. -phosphoniumhydrogenpolyfluorid, so wie z.B. in EP 896009 oder DE 3902078 beschrieben, gegebenenfalls verdünnt in ein- oder mehrwertigen Alkoholen oder nicht protischen Lösungsmitteln. Ebenso geeignet sind Salze polyfluorierter Carboxylate mit bevorzugt quartären Ammonium- sowie Phosphium-ktionen als Gegenion, wie in EP 1645577 beschrieben, gegebenenfalls verdünnt in ein- oder mehrwertigen Alkoholen oder nicht protischen Lösungsmitteln. Diese Katalysatoren führen zu asymmetrischen, niedrigviskosen Isocyanuratstrukturen, die in Verbindung mit den hier beschriebenen erfindungsgemäß niedrigviskosen Produkten eine besonders niedrige Viskosität aufweisen.

Ferner kann es denkbar sein, gegebenenfalls geringe Mengen von Monoalkoholen (E), die andere als (C) sind, sowie gegebenenfalls geringe Mengen von Di- oder Polyolen (F) als Aufbaukomponenten der wasseremulgierbaren Polyisocyanate zu verwenden.

Monoalkohole (E) sind beispielsweise C₁ bis C₂₀-Alkanole, C₅ bis C₁₂-Cycloalkanole, sowie C₁-C₄-Alkyloxy-C₁-C₂₀-alkanole, unter diesen bevorzugt C₁-C₄-Alkyloxy-C₁-C₄-alkanole.

Beispiele dafür sind Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol.

Di- und Polyole (F) sind Alkohole mit einer Funktionalität von 2 oder höher, bevorzugt 2 bis 6, besonders bevorzugt 2 bis 4, ganz besonders bevorzugt 2 bis 3 und insbesondere genau 2.

Beispiele dafür sind Trimethylolpropan, Neopentylglykol, Pentaerythrit, 1,4-Butan-diol, 1,6-Hexandiol, 1,2-Propandiol, 1,3-Propandiol, 2-Ethyl-1,3-Propandiol, 2-Methyl-1,3-Propandiol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,3-Butandiol, 1,4-Butandiol, Pentan-2,4-diol, 3-Methylpentan-1,5-diol, 2,2,4-Trimethylpentan-1,5-diol, 2-Methylpentan-2,4-diol, 2-Methylpentan-1,3-diol, 2-Ethylhexan-1,3-diol, 2-Propyl-1,3-heptandiol, 2,4-Diethyloctan-1,3-diol, Hydroxypivalinsäureneopentylglykolester, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder deren Gemische.

Denkbar ist auch der Einsatz von Poly-THF mit einem Molgewicht zwischen 162 und 4500, Poly-1,3-propandiol mit einem Molgewicht zwischen 134 und 400 oder Polyethylenglykol mit einem Molgewicht zwischen 238 und 458.

Die wasseremulgierbaren Polyisocyanate, nach Abtrennung von monomerem eingesetzten Isocyanat (A) sowie gegebenenfalls (B), sind in der Regel aus den oben genannten Aufbaukomponenten wie folgt aufgebaut:
(A) 25 bis 100 mol%, bevorzugt 34 bis 100, besonders bevorzugt 66 bis 100, ganz besonders bevorzugt 75 bis 100, insbesondere 90 bis 100, speziell 95 bis 100 und sogar 100 mol% (bezogen auf die Summe aller NCO-Gruppen in dem entstandenen wasseremulgierbaren Polyisocyanat),
(B) 0 bis 75 mol%, bevorzugt 0 bis 66, besonders bevorzugt 0 bis 34, ganz besonders bevorzugt 0 bis 25, insbesondere 0 bis 10, speziell 0 bis 5 und sogar 0 mol% (bezogen auf die Summe aller NCO-Gruppen in dem wasseremulgierbaren Polyisocyanat),
(C) mindestens 1,0 mol%, bevorzugt mindestens 1,5, besonders bevorzugt mindestens 2,0, ganz besonders bevorzugt mindestens 2,3, insbesondere mindestens 2,5, speziell mindestens 3, oft mindestens 4 und sogar mindestens 5 mol% sowie bis zu 25 mol%, bevorzugt bis 20, besonders bevorzugt bis 15 und ganz besonders bevorzugt bis 10 mol% (bezogen auf Hydroxygruppen im Verhältnis zur Summe aller NCO-Gruppen aus den Komponenten (A) und (B)),
(E) 0 bis 10 mol%, bevorzugt 0 bis 8, besonders bevorzugt 0 bis 5 und ganz besonders bevorzugt 0 mol% (bezogen auf Hydroxygruppen im Verhältnis auf die Summe aller NCO-Gruppen aus den Komponenten (A) und (B)) sowie
(F) 0 bis 10 mol%, bevorzugt 0 bis 8, besonders bevorzugt 0 bis 5 und ganz besonders bevorzugt 0 mol% (bezogen auf Hydroxygruppen im Verhältnis auf die Summe aller NCO-Gruppen aus den Komponenten (A) und (B)).

Die NCO Funktionalität der wasseremulgierbaren Polyisocyanat beträgt in der Regel mindestens 1,8 und kann bis zu 8 betragen, bevorzugt 1,8 bis 5 und besonders bevorzugt 2 bis 4.

Der Gehalt an Isocyanatgruppen nach der Oligomerisierung und Abtrennung von Monomeren, berechnet als NCO = 42 g/mol, beträgt in der Regel von 5 bis 25 Gew%.

Erfindungsgemäß entscheidend ist, daß die Umsetzung der Komponente (C) mit den Komponenten (A) sowie gegebenenfalls (B) sowie die Bildung von Isocyanuratgruppen gleichzeitig miteinander erfolgt. Darunter wird im Rahmen der vorliegenden Schrift verstanden, daß vor Beginn der Bildung von Isocyanuratgruppen aus (A) sowie gegebenenfalls (B) nicht mehr als 30 mol%, bevorzugt nicht mehr als 25, besonders bevorzugt nicht mehr als 20 und ganz besonders bevorzugt nicht mehr als 15 mol% der Hydroxygruppen in (C) unter Bildung von Urethan- sowie gegebenenfalls Allophanatgruppen abreagiert sind und gleichzeitig vor Beginn der Bildung von Urethangruppen nicht mehr als 15 mol%, bevorzugt nicht mehr als 12, besonders bevorzugt nicht mehr als 10, ganz besonders bevorzugt nicht mehr als 8 und insbesondere nicht mehr als 5 mol% der in (A) und gegebenenfalls (B) enthaltenen Isocyanatgruppen unter Bildung von Isocyanuratgruppen abreagiert sind.

Falls als weitere Aufbaukomponenten (E) und/oder (F) enthalten sind, so spielt es erfindungsgemäß nur eine untergeordnete Rolle, ob diese Komponenten vor, während oder nach der Isocyanuratbildung reagieren.

Die Umsetzung der Aufbaukomponenten miteinander kann diskontinuierlich oder kontinuierlich und beispielsweise folgendermaßen durchgeführt werden:

Dazu legt man die isocyanatgruppenhaltigen Komponenten (A) sowie gegebenenfalls (B) vor und dosiert gleichzeitig oder zeitnah den Katalysator (D) und die hydroxygruppenhaltigen Komponenten (C) sowie gegebenenfalls (E) und/oder (F) hinzu. In einer bevorzugten Ausführungsform kann mindestens eine hydroxygruppenhaltige Komponente als Lösungsmittel für den Katalysator (D) eingesetzt werden.

Alternativ können die isocyanatgruppenhaltigen Komponenten und die hydroxygruppenhaltigen Komponenten miteinander vermischt werden und Bedingungen, unter denen die Bildung von Urethangruppen noch nicht signifikant erfolgt. Zu diesem Gemisch wird dann der Katalysator (D) portionsweise oder vollständig zugegeben.

Die erfindungsgemäße Reaktion erfolgt dann unter Rühren bei einer Temperatur zwischen 40 °C und 170 °C, bevorzugt zwischen 45 °C und 160 °C, besonders bevorzugt zwischen 50 und 150 °C und ganz besonders bevorzugt zwischen 60 und 140 °C.

Die Beheizung kann beispielsweise über eine Mantelheizung, aufgeschweißte Voll- oder Halbrohre, über innenliegende Rohre oder Platten und/oder über einen Kreislauf mit einem externen Wärmetauscher, z. B. Röhren- oder Plattenwärmetauscher, erfolgen. Bevorzugt wird für die Erfindung ein Kreislauf mit einem externen Wärmetauscher verwendet. Die gleichmäßige Durchmischung der Reaktionslösung erfolgt auf bekannte Weise, z.B. durch Rühren, Umpumpen, Zwangs- oder Naturumlauf, vorzugsweise durch Zwangs- oder Naturumlauf.

Die mittlere Reaktionszeit beträgt in der Regel mindestens 2 Minuten, bevorzugt mindestens 5 Minuten, besonders bevorzugt mindestens 10 Minuten, ganz besonders bevorzugt mindestens 15 Minuten in und insbesondere mindestens 20 Minuten und kann bis zu 7 Stunden betragen, bevorzugt bis zu 90 Minuten, besonders bevorzugt bis zu 60 Minuten, ganz besonders bevorzugt bis zu 45 Minuten und insbesondere bis zu 30 Minuten.

Die Reaktionszone kann rückvermischt oder nicht rückvermischt sein, auch Kombinationen davon sind denkbar.

Bei den Reaktionszonen kann es sich beispielsweise um eine Hintereinanderschaltung von mehreren Rührkesseln handeln (Rührkesselkaskade) bis hin zu einer Strömungscharakteristik eines Rohrreaktors, bzw. um einen Rohrrekator oder um mindestens einen Rührkessel, der durch eine geeignete Aufteilung des Reaktionsvolumens beispielsweise durch Trennbleche in mehrere Zonen unterteilt ist (kaskadierter Rührkessel) oder Kombinationen davon.

Der volumenspezifische Leistungseintrag pro rückvermischter Reaktionszone sollte nicht weniger als 0,1 W/I, bevorzugt nicht weniger als 0,2 W/I und besonders bevorzugt nicht weniger als 0,5 W/I betragen. In der Regel sind bis zu 10 W/I ausreichend, bevorzugt bis zu 5, besonders bevorzugt bis zu 3 und ganz besonders bevorzugt bis zu 2 W/I. Der angegebene spezifische Leistungseintrag ist hier als eingetragene Leistung pro Liter Reaktorraumvolumen des Reaktors aufzufassen.

Die Leistung kann über alle möglichen Rührertypen, wie Propeller-, Schrägblatt-, Anker-, Scheiben-, Turbinen- oder Balken-Rührer eingetragen werden. Bevorzugt werden Scheiben- und Turbinen-Rührer eingesetzt.

In einer Ausführungsform wird die Reaktion diskontinuierlich in einem einzelnen Rührkessel durchgeführt. Die oben erwähnte gleichzeitige oder zeitnahe Zugabe des Katalysators (C) definiert sich dabei durch die technischen und operativen Begebenheiten.

In einer bevorzugten Ausführungsform wird die Reaktion kontinuierlich durchgeführt. In diesem Fall werden die Komponenten bevorzugt zeitgleich und kontinuierlich zugegeben.

Die Reaktion kann optional in mindestens einem Lösungsmittel durchgeführt werden und dieses mit der Abtrennung des unumgesetzten Isocyanats (A) sowie gegebenenfalls (B) ebenfalls abgetrennt werden.

Bevorzugt verwendet man kein Lösungsmittel.

Zur Stoppung der Reaktion wird ein geeignetes Desaktivierungsmittel in einem molaren Verhältnis von beispielsweise 0,5 bis 30, besonders bevorzugt von 0,6 bis 3, ganz besonders bevorzugt 0,8 bis 2, bezogen auf die eingesetzte Katalysatormenge (D) eingesetzt.

Nach Erreichen des gewünschten Umsetzungsgrades wird die Reaktion durch Abkühlen des Reaktionsgemischs oder bevorzugt durch thermische Desaktivierung des Katalysators oder durch Zusetzen eines geeigneten Desaktivierungsmittels gestoppt.

Der Umsatz kann in Abhängigkeit vom eingesetzten Isocyanat unterschiedlich gewählt werden. Im allgemeinen wird ein Umsatz (bezogen auf das Reaktionsgemisch vor Destillation) von 10 bis 60% (bezogen auf den NCO-Gehalt vor der Reaktion) angestrebt, bevorzugt auf 10 bis 40%.

Die Zugabe des Desaktivierungsmittels erfolgt in der Regel bei der Reaktionstemperatur, kann aber auch bei höherer oder niedrigerer Temperatur erfolgen, beispielsweise bis zu 30 °C niedriger, bevorzugt bis zu 20 °C niedriger und besonders bevorzugt bis zu 10°C niedriger.

Als Desaktivierungsmittel eignen sich beispielsweise anorganische Säuren, wie z.B. Chlorwasserstoff, phosphorige Säure oder Phosphorsäure, Carbonsäurehalogenide, wie z.B. Acetylchlorid oder Benzoylchlorid, Sulfonsäuren oder-ester, wie z.B. Methansulfonsäure, p-Toluolsulfonsäure, p-Toluolsulfonsäuremethyl- oder -ethylester, m-Chlorperbenzoesäure und vorzugsweise Dialkylphosphate wie z.B. Di-2-ethylhexylphosphat und Dibutylphosphat. Denkbar ist auch der Einsatz von carbamatgruppenhaltigen Desaktivierungsmitteln, wie sie beschrieben sind in der unveröffentlichten Europäischen Patentanmeldung mit dem Aktenzeichen 06125323.3 und dem Anmeldedatum 4.12.2006.

Die Zugabe ist abhängig von der Art des Desaktivierungsmittels. So wird Chlorwasserstoff bevorzugt gasförmig über oder bevorzugt durch das Reaktionsgemisch hindurch geleitet, flüssige Desaktivierungsmittel werden zumeist in Substanz oder als Lösung in einem unter den Reaktionsbedingungen inerten Lösungsmittel und feste Desaktivierungsmittel in Substanz oder als Lösung oder Suspension in einem unter den Reaktionsbedingungen inerten Lösungsmittel zugegeben.

Eine thermische Desaktivierung des Katalysators ist in der Regel nur bei thermolabilen Katalysatoren (D) möglich, insbesondere bei solchen Katalysatoren, die ein Ammoniumsalz enthalten, daß einen β-hydroxyalkylsubstituierten Rest trägt. Derartige thermolabile Katalysatoren verlieren häufig bereits bei Temperatur oberhalb von 80 °C merklich an Aktivität, so daß es zur Desaktivierung ausreichend ist, das Reaktionsgemisch auf Temperaturen oberhalb von 90, bevorzugt oberhalb von 100 und besonders bevorzugt oberhalb von 120 °C zu erhitzen. Dies kann in einer bevorzugten Ausführungsform im Rahmen der destillativen Abtrennung des unumgesetzten Isocyanats aus dem so erhaltenen Reaktionsgemisch erfolgen:

Das so hergestellte Polyisocyanate enthaltende Reaktionsgemisch wird abschließend in an sich bekannter Weise, beispielsweise durch Dünnschichtdestillation, bei einer Temperatur von 90 bis 220 °C, gegebenenfalls im Vakuum, gegebenenfalls zusätzlich mit Durchleiten von inertem Strippgas, von gegebenenfalls vorhandenen Lösungs- oder Verdünnungsmittel und vorzugsweise von überschüssigen, nicht-umgesetzten Isocyanaten befreit, so daß die Isocyanuratgruppen aufweisenden Polyisocyanate mit einem Gehalt an monomeren Isocyanaten von z.B. unter 1,0 Gew.-%, vorzugsweise unter 0,5 Gew.-%, besonders bevorzugt unter 0,3, ganz besonders bevorzugt unter 0,2 und insbesondere nicht mehr als 0,1 Gew% erhältlich sind.

Als Apparate dafür dienen Flash-, Fallfilm-, Dünnschicht- und/oder Kurzwegverdampfer, denen gegebenenfalls eine kurze Kolonne aufgesetzt sein kann.

Die Destillation erfolgt in der Regel bei einem Druck zwischen 0,1 und 300 hPa, bevorzugt unter 200 hPa und besonders bevorzugt unter 100 hPa.

In einer bevorzugten Ausführungsform wird die Destillation mehrstufig durchgeführt in beispielsweise 2 bis 5 Stufen.

Dabei wird der Druck vorteilhafterweise von Stufe zu Stufe abgesenkt.

Die Temperatur in den einzelnen Destillationsstufen beträgt jeweils von 90 bis 220 °C.

Das abgetrennte Destillat von monomerem Isocyanat wird bevorzugt in die Reaktion zurückgeführt und von neuem, ergänzt um frisch zugeführtes Isocyanat, eingesetzt.

Dieses neu zugeführte Isocyanat kann vorteilhafterweise vor der Reaktion destilliert oder mit einem inerten, trocknen Gas gestrippt werden.

Falls erforderlich kann dieses rückgeführte Destillat einer Behandlung zur Verbesserung der Farbzahl unterworfen werden, beispielsweise einer Filtration über Filter, Aktivkohle oder Aluminiumoxid.

Das fertige Produkt kann dann abschließend, falls gewünscht, mit mindestens einem Lösungsmittel vermischt werden.

Beispiele für derartige Lösungsmittel sind aromatische und/oder (cyclo)aliphatische Kohlenwasserstoffe und deren Gemische, sowie bevorzugt polare, nicht protische Lösungsmittel (und/oder Filmbildehilfsmittel).

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische. Solche aromatischen Kohlenwasserstoffgemische sind weniger bevorzugt können aber in Beimengungen vorliegen.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen, beispielsweise Petrolether oder Ligroin, sind weniger bevorzugt können aber in Beimengungen vorliegen.

Der Gehalt an aliphatischen Kohlenwasserstoffen beträgt in der Regel weniger als 5, bevorzugt weniger als 2,5 und besonders bevorzugt weniger als 1 Gew%.

Bevorzugt sind polare, nicht protische Lösungsmittel wie Ester, Ether; Glycolether und - ester, bevorzugt von Propylenglykol, besonders bevorzugt von Ethylenglykol, sowie Carbonate.

Ester sind beispielsweise n-Butylacetat, Ethylacetat, 1-Methoxypropylacetat-2 und 2-Methoxyethylacetat, sowie gamma-Butyrolacton, 1,2-Propylencarbonat, Butylglycolacetat, Butyldiglycolacetat, Dipropylenglykol dimethylether, das als Isomerengemisch beispielsweise unter dem Handelsnamen Proglyde® DMM von der Fa. Dow Chemical Company erhältlich ist.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Besonders bevorzugt sind n-Butylacetat, 1-Methoxypropylacetat-2, 2-Methoxyethylacetat, N-Methyl-pyrrolidon, gamma-Butyrolacton, Propylencarbonat (Solvenon® PC; 4-Methyl-1,3-dioxolan-2-on), Butoxyl (3-Methoxy-n-butylacetat), Butylglycolacetat, Butyldiglycolacetat, Dipropylenglycol-dimethylether, Propylenglycoldiacetat, Ethyl-3-ethoxy-propionat sowie Dicarbonsäureester und deren Mischungen, sowie Gemische der genannten Lösungsmittel.

Ganz besonders bevorzugt sind n-Butylacetat, 1,2-Propylencarbonat, Butylglykolacetat, Butyldiglykolacetat, Dipropylenglykol-dimethylether und 3-Methoxy-n-butylacetat.

Durch die Wahl der Lösungsmittel kann z.B. die Teilchengröße, über die Verdunstungszahl die Lackhärtung beeinflusst werden. Butylglycolacetat hat z.B. eine niedrigere Verdunstungszahl als Butyldiglycolacetat, so dass man über das Verhältnis der beiden die Offenzeit einstellen bzw. mit letzterem verlängern kann.

Die erfindungsgemäßen wasseremulgierbaren Polyisocyanate weisen zumeist eine niedrige Viskosität auf, was deren Einarbeitbarkeit in Wasser und in Beschichtungsmassen erleichtert. Zudem kann durch niedrigviskose Polyisocyanate der Einsatz von Lösungsmitteln verringert werden oder sogar unterbleiben, so dass die mit den erfindungsgemäßen Polyisocyanaten erhaltenen Beschichtungsmassen einen geringeren Gehalt an flüchtigen organischen Verbindungen (VOC) aufweisen.

In der Regel liegt die Viskosität der erfindungsgemäß erhaltenen wasseremulgierbaren Polyisocyanate unter 4000 mPas, bevorzugt unter 2000 mPas, besonders bevorzugt unter 1500 mPas, ganz besonders bevorzugt unter 1300 mPas und insbesondere zwischen 900 und 1200 mPas (gemäß DIN EN ISO 3219 bei 23 °C in einem Kegel-Platte-Rotationsviskosimeter bei einem Schergefälle von 100 s⁻¹), so dass eine Verdünnung mit Lösungsmittel nicht erforderlich ist.

Die erfindungsgemäß erhaltenen Polyisocyanate weisen eine günstige Farbzahl auf. So beträgt die Farbzahl der erfindungsgemäß erhaltenen Polyisocyanate, bestimmt gemäß DIN ISO 6271, in der Regel unter 100 APHA, bevorzugt unter 80 APHA, besonders bevorzugt unter 60 APHA, ganz besonders bevorzugt unter 50 APHA und insbesondere unter 40 APHA.

Ein weiterer Gegenstand der vorliegenden Erfindung ist die Herstellung von Beschichtungsmassen aus den erfindungsgemäß hergestellten wasseremulgierbaren isocyanuratgruppenhaltigen Polyisocyanaten durch Umsetzung mit wässrigen Lösungen, Emulsionen oder Dispersionen von Polyolen: Polyacrylatol-, Polyesterol-, Polyurethanol-, Polyetherol-, Polycarbonatol-Dispersionen, sowie deren Hybriden und/oder Mischungen der genannten Polyole. Hybride meint Pfropfcopolymere und andere chemische Reaktionsprodukte, die chemisch gebundene Molekülteile mit unterschiedlichen (oder auch gleichen) der genannten Gruppen beinhalten.

Polyacrylatole können als primäre oder sekundäre Dispersionen, Emulsionen, Lösungen hergestellt werden. Diese werden hergestellt aus olefinisch ungesättigten Monomeren. Dies sind erstens Säuregruppen aufweisende Comonomere mit z.B. Carboxyl-, Sulfonsäure- und/oder Phosphonsäure-Gruppen oder deren Salze wie z.B. (Meth)acrylsäure, Vinylsulfonsäure oder Vinylphosphonsäure. Dies sind zweitens Hydroxylgruppen aufweisende Comonomere wie Hydroxyalkylester oder -amide der (Meth)acrylsäure wie z.B. 2-Hydroxyethyl- und 2- oder 3-Hydroxypropyl-(meth)acrylat. Dies sind drittens ungesättigte Comonomere, die weder saure noch Hydroxylgruppen aufweisen wie Alkylester der (Meth)acrylsäure, Styrol und Derivate, (Meth)acrylnitril, Vinylester, Vinylhalogenide, Vinylimidazol und andere. Die Eigenschaften können z.B. über die Zusammensetzung des Polymeren, bzw. z.B. über die Glasübergangstemperaturen der Comonomere (mit unterschiedlicher Härte) beeinflusst werden.

Polyacrylatole für wässrige Anwendungen werden beispielsweise beschrieben in EP 358979 (US 5075370), EP 557844 (US 6376602), EP 1141066 (US 6528573). Ein Beispiel für eine kommerziell erhältliche Polyacrylat-Sekundäremulsion ist Bayhydrol® A 145 (ein Produkt der Fa. Bayer MaterialScience). Beispiele für eine Polyacrylat-Primäremulsion sind Bayhydrol® VP LS 2318 (ein Produkt der Fa. Bayer MaterialScience) und Luhydran®-Typen der BASF AG.
Andere Beispiele sind Macrynal® VSM 6299w/42WA der Firma Cytec, und Setalux® AQ-Typen der Firma Nuplex Resins wie Setalux®6510 AQ-42, Setalux® 6511 AQ-47, Setalux® 6520 AQ-45, Setalux® 6801 AQ-24, Setalux® 6802 AQ-24, und Joncryl® der BASF Resins.

Polyesterole für wässrige Anwendungen werden beispielsweise beschrieben unter EP 537568 (US 5344873), EP 610450 (US 6319981) und EP 751197 (US 5741849). Polyesterole für wässrige Anwendungen sind beispielsweise WorléePol- Typen der Worlée-Chemie GmbH, Necowel®-Typen der Ashland-Südchemie-Kernfest GmbH, und Setalux® 6306 SS-60 der Fa. Nuplex Resins.

Polyurethanpolyol-Dispersionen für wässrige Anwendungen werden beispielsweise beschrieben unter EP 469389 (US 559805). Sie werden z.B. unter dem Markennamen Daotan® der DSM NV vermarktet.

Polyetherole für wässrige Anwendungen werden beispielsweise beschrieben unter EP 496210 (US 5304400).

Hybride und Mischungen der verschiedenen Polyole werden beispielsweise beschrieben unter EP 424705 (US 417998), EP 496205 (US 5387642), EP 542085 (5308912), EP 542105 (US 5331039), EP 543228 (US 5336711), EP 578940 (US 5349041), EP 758007 (US 5750613), EP 751197 (US 5741849), EP 1141065 (US 6590028). Polyester/Polyacrylate werden besipielsweise beschrieben unter EP 678536 (US 5654391). Ein Beispiele für ein Polyester/Polyacrylat-Sekundäremulsion ist Bayhydrol® VP LS 2139/2 (ein Produkt der Fa. Bayer MaterialScience).

Polyole für wässrige Anwendungen sind ansonsten unter folgenden Markennamen bekannt: Macrynal®, Viacryl® der Firma Cytec; Bayhydrol® der Fa. Bayer MaterialScience (Polacrylat-, Polyurethan-, Polyester/Polyacrylat-, Polyester/Polyurethan-, Fettsäure-modifizierte Polyester/Polyacrylat-, Polycarbonat-Dispersionen), Alberdingk® und Alberdur® der Firma Alberdingk Boley, Plusaqua® (Alkyd-, Polyester, Silicon-Polyester) der Firma Omya, Necowel® der Ashland-Südchemie-Kernfest GmbH (Alkyldharze), Daotan® der DSM NV (ehemals Solutia) (Polyester, Polycarbonat, Fettsäure-basiert, Polyester-Urethan-Acryl-Hybride), Neocryl® (z.B. AF-10: Acryl-Fluoro-Copolymer) der Firma DSM NeoResins.

Zur Einarbeitung der erfindungsgemäßen wasseremulgierbaren Polyisocyanate reicht in der Regel ein Verteilen des erfindungsgemäß erhaltenen Polyisocyanats in der wäßrigen Dispersion des Polyols. Zur Erzeugung der Emulsion ist in der Regel ein Energieeintrag von 0 bis nicht mehr als 10⁸ W/m³ erforderlich.

Die Dispersionen haben im allgemeinen einen Feststoffgehalt von 10 bis 85, bevorzugt von 20 bis 70 Gew.-% und eine Viskosität von 10 bis 500 m Pas (gemessen bei einer Temperatur von 20°C und einer Schergeschwindigkeit von 250 s⁻¹.

In der so hergestellten Dispersion beträgt die mittlere Teilchengröße (z-Mittelwert), gemessen mittels dynamischer Lichtstreuung mit dem Malvern® Autosizer 2 C, im allgemeinen <1000 nm, bevorzugt <500 nm und besonders bevorzugt < 200 nm. Im Normalfall beträgt der Durchmesser 20 bis 80 nm.

Die erfindungsgemäß erhaltenen Polyisocyanate können verwendet werden zur Herstellung von Polyurethanen und Polyurethanlacken, beispielsweise für einkomponentige, zweikomponentige, strahlungshärtbare oder Pulverlackbeschichtungssysteme sowie damit hergestellt Lacke zur Beschichtung von verschiedenen Substraten, wie z. B. Holz, Holzfurnier, Papier, Pappe, Karton, Folie, Textil, Leder, Vlies, Kunststoffoberflächen, Glas, Keramik, mineralische Baustoffe und Metalle, die jeweils optional vorbeschichtet bzw. vorbehandelt sein können.

Bei einer Verwendung in Beschichtungsmitteln können die erfindungsgemäßen Polyisocyanate insbesondere in Grundierungen, Füllern, pigmentierten Decklacken, Basislacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Derartige Beschichtungsmassen eignen sich als oder in Innen- oder Außenbeschichtungen, also solche Anwendungen, die dem Tageslicht ausgesetzt sind, bevorzugt von Gebäudeteilen, Dekolackierungen, Beschichtungen auf (Groß-)Fahrzeugen und Flugzeugen und industriellen Anwendungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern, Baustahl, Möbeln, Fenstern, Türen und Parkett, Can-Coating und Coil-Coating. Derartige Beschichtungsmassen eignen sich auch für Bodenbeläge, wie bei Parkdecks oder in Krankenhäusern. Insbesondere werden die erfindungsgemäßen Beschichtungsmassen als oder in Automobilklar-, -basis- und -decklacke(n), Primern und Füllern eingesetzt, insbesondere im refinish-Bereich.

In einer bevorzugten Form werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge, Holz und bei refinish-Anwendungen.

Optional können die Isocyanatgruppen in den erfindungsgemäßen Polyisocyanaten auch blockiert vorliegen. Derartige Gruppen zur Blockierung sind beschrieben in D. A. Wicks, Z. W. Wicks, Progress in Organic Coatings, 36, 148-172 (1999), 41, 1-83 (2001) sowie 43, 131-140 (2001).

Bevorzugte Gruppen zur Blockierung sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Diese genannten Gruppen können mit den erfindungsgemäßen Polyisocyanaten beliebig umgesetzt werden.

Imidazolische Gruppen als gegenüber Isocyanatgruppen reaktive Gruppen, hier kurz als "Imidazole" bezeichnet, sind beispielsweise bekannt aus WO 97/12924 und EP 159117, Triazole aus US 4482721, CH-acide cyclische Ketone sind beispielsweise beschrieben in DE-A1 102 60 269, dort besonders in Absatz [0008] und bevorzugt in den Absätzen [0033] bis [0037], besonders bevorzugt Cyclopentanon-2-carbonsäureester und insbesondere Cyclopentanon-2-carbonsäureethylester.

Bevorzugte Imidazole sind beispielsweise solche Imidazole, die neben der freien NH-Gruppe noch eine weitere funktionelle Gruppe enthalten, wie z.B. -OH, -SH, -NH-R, -NH2, -CHO, wie z.B., 4-(Hydroxymethyl) imidazol, 2-Mercapto-imidazol, 2-Aminoimidazol, 1-(3-Aminopropyl) imidazol, 4,5-Diphenyl-2-Imidazolethiol, Histamin, 2-Imidazol-carboxaldehyd, 4-Imidazol carbonsäure, 4,5-Inmidazol-dicarbonsäure, L-Histidin, L-Carnosine, und 2, 2'-Bis-(4,5 dimethyl-imidazol).

Geeignete Triazole sind 3-Amino-1,2,4 Triazol, 4-Amino-1,2,4 Triazol, 3,5 Diamino-1,2,4 Triazol, 1H-1,2,4 Triazol-3-Thiol, 5-Methyl-1H-1,2,4 Triazol-3-Thiol und 3-Amino-5-Mercapto-1,2,4-Triazol.

Bevorzugt sind Phenole, Oxime, N-Hydroxyimide, Lactame, Imidazole, Triazole, Malonsäureester und Alkylacetonate, besonders bevorzugt sind Lactame, Phenole, Imidazole, Triazole und Malonsäureester und ganz besonders bevorzugt sind Phenole.

Es stellt einen Vorteil der erfindungsgemäßen Polyisocyanate dar, daß sie eine geringere Viskosität, eine verbesserte Dispergierbarkeit und/oder einen erhöhten Gehalt an NCO-Gruppen aufweisen, verglichen mit anderen wasseremulgierbare Polyisocyanate ähnlicher Zusammensetzung aber anderer Herstellung.

Während die DE-OS 3810908 keine Trimerisierung von Isocyanaten in Gegenwart von monofunktionellen Polyalkylenoxiden offenbart und ohnehin lediglich die Verwendung von Alkoholen als Cokatalysatoren in der Trimerisierung von Isocyanaten beschreibt, offenbart die EP 56159 A1 lediglich die Verwendung von Polyalkylenoxiden als Komplexbildner für basische Alkalimetallverbindungen, die als Katalysator für die Trimerisierung von Isocyanaten dienen können.

Beide Schriften erkennen nicht die Vorteile, die die erfindungsgemäße Umsetzung von Isocyanatgruppen mit alkoxylierten Monoalkoholen (C) gleichzeitig mit der Isocyanuratbildung für die entstehenden Produkte erbringen. Der Offenbarungsgehalt der DE-OS 3810908 und der EP 56159 A1 gibt keinen Hinweis auf beispielsweise eine verbesserte Wasseremulgierbarkeit der erfindungsgemäß erhaltenen Produkte.

Daher ist ein weiterer Gegenstand der vorliegenden Erfindung die Verwendung von alkoxylierten Monoalkoholen (C) in der Herstellung von wasseremulgierbaren Polyisocyanaten aus 1,6-Hexamethylendiisocyanat (A) sowie optional mindestens einem weiteren Diisocyanat (B) unter gleichzeitiger Bildung von isocyanuratgruppenhaltigen Polyisocyanaten in Gegenwart mindestens eines Katalysators.

Die erfindungsgemäßen wasseremulgierbaren Polyisocyanat können als Vernetzerfür die Herstellung von Lacken, Klebstoffen und Dichtungsmassen eingesetzt werden. Somit sind Lacken, Klebstoffen und Dichtungsmassen, enthaltend mindestens ein erfindungsgemäßes wasseremulgierbares Polyisocyanat ebenfalls Gegenstand der vorliegenden Erfindung.

### Beispiele

In dieser Schrift angegebene Prozent und ppm-Angaben beziehen sich, wenn nicht anders angegeben, auf Gew% und Gew.ppm.

### Allgemeine Arbeitsvorschrift

1,6-Hexamethylendiisocyanat (HDI) wurde in einem Kolben mit Rührer und Rückflußkühler vorgelegt und 2 h mit Stickstoff gespült. Anschließend wurde ein monofunktionelles Polyalkylenoxid gemäß der Tabelle zugegeben und die Mischung auf 80°C erwärmt. Bei Erreichen der Temperatur wurden 50 bis 900 ppm N-(2-Hydroxypropyl)-N,N,N-trimethylammonium-2-ethylhexanoat (DABCO TMR®, Firma Air Products) zugesetzt.

Unter diesen Reaktionsbedingungen findet keine wesentliche Reaktion zwischen Hydroxy- und Isocyanatgruppen bzw. zwischen den Isocyanatgruppen statt. Mit dem genannten Katalysator läuft die Reaktion erst signifikant oberhalb von 80 °C ab.

Das Reaktionsgemisch wurde bei einer Temperatur von 80°C bis zum entsprechenden NCO-Wert gemäß Tabelle umgesetzt. Das Reaktionsgemisch wurde mit einem 1,5-fachen Überschuß 95% igem Phosphorsäure-bis-(2-Ethylhexylester) abgestoppt und das nicht reagierte HDI durch Destillation mittels Dünnschichtverdampfer entfernt.

Die Details zu Reaktionszeit, NCO-Gehalt des Produktes, monofunktionellem Polyalkylenoxid und dessen Menge sind in der Tabelle angegeben.

| Nr. | Isocyanat | Alkohol | Gehalt Alkohol [g/ 100 g HDI] vor Umsetzung | Gehalt Alkohol im Produkt [% w/w] | Menge Katalysator/HDI in ppm | Reaktionszeit [min] | Umsatz [%] | Roh-NCO [%] | NCO [%] | Viskosität [mPa*s] |
|---|---|---|---|---|---|---|---|---|---|---|
| 1 | HDI | B | 4,48 | 11,72 | 100 | 20 | 36,6 | 38,5 | 20,0 | 1330 |
| 2 | HDI | B | 6,72 | 15,39 | 90 | 15 | 40,9 | 37,3 | 19,0 | 1230 |
| 3 | HDI | B | 6,67 | 14,80 | 100 | 10 | 42,2 | 37,0 | 20,1 | 792 |
| 4 | HDI + IPDI (3:1) | B | 8,72 | 34,09 | 480 | 140 | 18,0 | 38,9 | 15,1 | 640 |
| 5 | IPDI | B | 6,67 | 14,90 | 800 | 10 | 41,8 | 28,0 | 14,5 | |

| | | | | | | | | | | |
|---|---|---|---|---|---|---|---|---|---|---|
| Roh-NCO: NCO-Gehalt des undestillierten Reaktionsgemisches NCO: NCO-Gehalt des Reaktionsgemisches nach Abtrennung des umumgesetzten Isocyanatmonomeren | | | | | | | | | | |

Bei Polyether A handelt es sich um ein auf Methanol gestartetes, unter Kaliumhydroxidkatalyse hergestelltes, monofunktionelles Polyethylenoxid mit einer OH-Zahl von 112, gemessen nach DIN 53 240, entsprechend einem Molekulargewicht von 500 g/mol. Die noch anwesenden Katalysatorreste wurden anschließend mit Essigsäure neutralisiert. Die Basizität wird durch Titration mit HCl zu 10,6 mmol/kg bestimmt.

Bei Polyether B handelt es sich um ein auf Methanol gestartetes, unter Kaliumhydroxidkatalyse hergestelltes, monofunktionelles Polyethylenoxid mit einer OH-Zahl von 112, gemessen nach DIN 53 240, entsprechend einem Molekulargewicht von 500 g/mol. Die noch anwesenden Katalysatorreste wurden anschließend mit Essigsäure neutralisiert und das Produkt entsalzt. Hierbei wird auch gebildetes Kaliumacetat entfernt.

### Vergleichsbeispiel 1

Analog Beispiel 2 aus WO 2005/047357 wurde ein Isomerengemisch aus 80 Teilen 2,4-Toluylendiisocyanat und 20 Teilen 2,6-Toluylendiisocyanat mit Polyether A vollständig, d.h. bis zu einem NCO-Gehalt von 0 Gew.%, umgesetzt.

1463 g HDI werden in einem Kolben mit Rührer und Rückflußkühler vorgelegt und 2 h mit Stickstoff gespült. Anschließend werden 77 g des hergestellten Urethans und 100 ppm DABCO TOR® zugegeben, die Mischung auf 80°C erwärmt und bis zum Roh-NCO Wert von 37,0 % umgesetzt. Das Reaktionsgemisch wird mit einem 1,5-fachen Überschuß 95% igem Phosphorsäure-bis-(2-Ethylhexylester) abgestoppt und das nicht reagierte HDI durch Destillation mittels Dünnschichtverdampfer entfernt.

Man erhielt ein schlecht wasserdispergierbares Polyisocyanat mit einem NCO-Gehalt von 19,5% und einer Viskosität von 2600 mPa*s.

### Vergleichsbeispiel 2

2617 g HDI wurden in einem Kolben mit Rührer und Rückflußkühler vorgelegt und 2 h mit Stickstoff gespült. Anschließend wurden 118 g Polyether B zugegeben und die Mischung auf 80°C erwärmt. Nach 1 h bei 80°C wurden 100 ppm DABCO TMR® zugesetzt und das Reaktionsgemisch bei einer Außentemperatur von 85°C bis zum Roh-NCO Wert von 38,5 % umgesetzt.

Das Reaktionsgemisch wurde mit einem 1,5-fachen Überschuß 95%igem Phosphorsäure-bis-(2-Ethylhexylester) abgestoppt und das nicht reagierte HDI durch Destillation mittels Dünnschichtverdampfer entfernt.

Man erhielt ein im Vergleich zu Beispiel 1 schlecht wasserdispergierbares Polyisocyanat mit einem NCO-Gehalt von 20,16% und einer Viskosität von 910 mPa*s.

### Vergleichsbeispiel 3

1990 g HDI wurden in einem Kolben mit Rührer und Rückflußkühler vorgelegt und 2 h mit Stickstoff gespült. Anschließend wurden 93 g Polyether B und als Allophanatisierungskatalysator 55ppm Zinkacetylacetonat zugegeben und die Mischung auf 80°C erwärmt. Die leicht exotherme Reaktion wurde durch Luftkühlung bei 80-85°C gehalten und bis zum Roh-NCO Wert von 39,4 % umgesetzt. Das nicht reagierte HDI wurde durch Destillation mittels Dünnschichtverdampfer entfernt.

Man erhielt ein wasserdispergierbares Polyisocyanat mit einem NCO-Gehalt von 18,1 % und einer im Vergleich zu Beispiel 2 deutlich erhöhten Viskosität von 2800 mPa*s.

### Vergleichsbeispiel 4 (analog Beispiel 1, EP 206 059)

1000 g eines handelsüblichen HDI-Isocyanurates (Basonat® HI 100 der Fa. BASF Aktiengesellschaft mit NCO-Wert 22,0% und Viskosität 3000 mPa*s) wurden in einem Kolben mit Rührer und Rückflußkühler vorgelegt und ca. 30 min mit Stickstoff gespült. Anschließend wurden 150 g Polyether B zugegeben und 2 h bei 110 °C reagiert. Die Reaktion wurde durch Zugabe von 0,31 g para-Toluolsulfonsäure abgestoppt.

Man erhielt ein wasserdispergierbares Polyisocyanat mit NCO-Gehalt von 17,8 % und Viskosität von 2300 mPa*s.

Im Vergleich zu Beispiel 3 ist die Viskosität dieses Produktes höher und der Gehalt an freien NCO-Gruppen niedriger.

### Vergleichsbeispiel 5 (gemäß Beispiel 5 der EP 524500)

2490 g HDI wurden in einem Kolben mit Rührer und Rückflußkühler vorgelegt und 2 h mit Stickstoff gespült. Anschließend wurden 145 g Polyether B zugegeben und die Mischung auf 70°C erwärmt. Nach 1 h bei 70°C wurden 263 ppm Benzyltrimethylammoniumhydroid zugesetzt und das Reaktionsgemisch bis zum Roh-NCO Wert von 39,0 % umgesetzt. Das Reaktionsgemisch wurde mit einem 1,5-fachen Überschuß 95% igem Phosphorsäure-bis-(2-Ethylhexylester) abgestoppt und das nicht reagierte HDI durch Destillation mittels Dünnschichtverdampfer entfernt.

Man erhielt ein wasserdispergierbares Polyisocyanat mit einem NCO-Gehalt von 18,7% und einer Viskosität von 820 mPa*s.

Im Vergleich zu Beispiel 3 sind Viskosität und Gehalt an freien NCO-Gruppen dieses Produktes vergleichbar, jedoch ist das Produkt stärker gefärbt.

### Prüfung der Qualität der Einarbeitbarkeit:

In ein 50 mL Penicillinglas werden 4 g des Reaktionsproduktes aus den betreffenden Beispielen eingewogen. Dann wird mit 1 g Propylencarbonat auf einen Festgehalt von 80% verdünnt. Anschließend wird die Harzlösung mit einem Tropfen Kristallviolett (1 %ig in Isobutanol) homogen eingefärbt. Zu dieser Mischung gibt man nacheinander 10 g Macrynal® VSM 6299w/42WA (Polyacrylatol-Emulsion der OH-Zahl 135 bezogen auf Feststoff, Produkt der Firma Cytec) und 2,6 g Wasser. Anschließend rührt man die Mischung 1,5 Minuten lang mit einem 1 cm breiten Metallspatel und gießt einen Teil der Mischung zur Beurteilung auf eine Glasplatte aus.

Die Beurteilung erfolgt anhand einer Notenskala. Dabei gilt:
Note 1: gute Einarbeitbarkeit, gleichmäßige Fläche
Note 2: mäßige Einarbeitbarkeit, wenig Stippen
Note 3: schlechte Einarbeitbarkeit, viele Stippen

| Nr. | NCO [%] | Viskosität [mPa*s] | Dispergierbarkeit |
|---|---|---|---|
| erfindungsgemäße Beispiele | | | |
| 1 | 20,0 | 1330 | 1 |
| 2 | 19,0 | 1230 | 1 |
| 3 | 20,1 | 792 | 1 |
| 4 | 15,1 | 640 | 1 |
| Vergleichsbeispiele | | | |
| 1 | 19,5 | 2600 | 3 |
| 2 | 20,1 | 910 | 2 |
| 3 | 18,1 | 2800 | 1 |
| 4 | 17,8 | 2296 | 3 |
| 5 | 18,7 | 820 | 1 |

### Anwendungstechnische Beispiele

Von den Polyisocyanaten der Beispiele 1 bis 5 sowie des Vergleichsbeispiels 1 wurden zweikomponentige Polyurethanlacke auf Basis von Macrynal® VSM 6299w (Firma Cytec Surface Specialties; Index 150) und Bayhydrol® A 145 (Firma: BayerMaterialScience) angefertigt. Man beobachtete bei den Polyurethanlacken auf Basis der Polyisocyanate der Beispiele 1 bis 5 eine schnellere Antrocknung. Diese wurde mit einem Wattebausch getestet. Als Maß für die Antrocknung gilt, ob die Lackoberfläche bei lockerer Berührung nicht mehr geschädigt wird.

## Patentansprüche

1. Verfahren zur Herstellung von wasseremulgierbaren, isocyanuratgruppenhaltigen Polyisocyanaten, **dadurch gekennzeichnet, daß** man
(A) ein (cyclo)aliphatisches Diisocyanat.
(B) gegebenenfalls mindestens ein weiteres Isocyanat und
(C) mindestens einen alkoxylierten Monoalkohol
gleichzeitig in Gegenwart mindestens eines Katalysators (D), der die Bildung von Isocyanuratgruppen aus Isocyanatgruppen zu beschleunigen vermag, miteinander umsetzt, die Umsetzung bei Erreichen des gewünschten Umsatzes stoppt und das unumgesetzte Diisocyanat (A) sowie gegebenenfalls (B) aus dem Reaktionsgemisch abtrennt, wobei die Menge alkoxyliertem Monoalkohol (C) nach Ende der Umsetzung und Abtrennung von unumgesetzten (A) sowie gegebenenfalls (B) mindestens 1,0 mol% bezogen auf Hydroxygruppen im Verhältnis zur Summe aller NCO-Gruppen aus den Komponenten (A) und (B) beträgt.

2. Verfahren gemäß Anspruch 1, **dadurch gekennzeichnet, daß** Diisocyanat (A) ausgewählt ist aus der Gruppe bestehend aus 1,6-Hexamethylendiisocyanat (HDI), Isophorondiisocyanat (IPDI) 4,4'- und 2,4'-Di(isocyanatocyclohexyl)methan.

3. Verfahren gemäß Anspruch 1, **dadurch gekennzeichnet, daß** kein Diisocyanat (B) anwesend ist.

4. Verfahren gemäß einem der vorstehenden Ansprüche, **dadurch gekennzeichnet, daß** es sich bei Komponente (C) um einen Polyetheralkohol der Formel
R¹-O-[-Xᵢ-]ₖ-H
handelt, worin
R¹ C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₂₀-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeutet,
k für eine ganze Zahl von 5 bis 40, bevorzugt 7 bis 20 und besonders bevorzugt 10 bis 15 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-worin Ph für Phenyl und Vin für Vinyl steht.

5. Verfahren gemäß Anspruch 4, **dadurch gekennzeichnet, daß** R¹ ausgewählt ist aus der Gruppe bestehend aus Methyl, Ethyl, *iso*-Propyl, n-Propyl, n-Butyl, *iso*-Butyl, *sek*-Butyl und *tert*-Butyl.

6. Verfahren gemäß einem der vorstehenden Ansprüche, **dadurch gekennzeichnet, daß** es sich bei dem Katalysator (D) um ein quartäres Ammoniumsalz der Formel 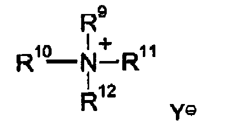 mit
Y^{e}= Carboxylat (R¹³COO⁻), Fluorid (F⁻), Carbonat (R¹³O(CO)O⁻) oder Hydroxid (OH⁻) handelt,
worin
R⁹ bis R¹² gleiche oder unterschiedliche Alkylgruppen mit 1 bis 20 Kohlenstoffatomen darstellen, die gegebenenfalls mit Hydroxyl- oder Phenylgruppen substituiert sind und
R¹³ darin Wasserstoff, C₁ bis C₂₀-Alkyl, C₆ bis C₁₂-Aryl oder C₇ bis C₂₀-Arylalkyl, das jeweils optional substituiert sein kann
bedeuten.

7. Verfahren gemäß Anspruch 6, **dadurch gekennzeichnet, daß** die Reste R⁹ bis R¹² unabhängig voneinander ausgewählt sind aus der Gruppe bestehend aus Methyl, Ethyl und n-Butyl und R¹² zusätzlich Benzyl, 2-Hydroxyethyl und 2-Hydroxypropyl bedeuten kann.

8. Verfahren gemäß einem der vorstehenden Ansprüche, **dadurch gekennzeichnet, daß** der Katalysator (D) mit einem Desaktivierungsmittels ausgewählt aus der Gruppe bestehend aus anorganischen Säuren, Carbonsäurehalogeniden, Sulfonsäuren, Sulfonsäureestern, m-Chlorperbenzoesäure, Dialkylphosphaten und carbamatgruppenhaltigen Verbindungen desaktiviert wird.

9. Verfahren gemäß einem der Ansprüche 1 bis 7, **dadurch gekennzeichnet, daß** der Katalysator (D) durch Erhitzen auf Temperaturen oberhalb von 90 °C desaktiviert wird.

10. Verwendung von wasseremulgierbaren Polyisocyanaten erhalten nach einem der vorstehenden Verfahren zur Herstellung von Polyurethanen und Polyurethanlacken, für einkomponentige, zweikomponentige, strahlungshärtbare oder Pulverlackbeschichtungssysteme, und in Lacken zur Beschichtung von Holz, Holzfurnier, Papier, Pappe, Karton, Folie, Textil, Leder, Vlies, Kunststoffoberflächen, Glas, Keramik, mineralische Baustoffe und Metalle, die Jeweils optional vorbeschichtet bzw. vorbehandelt sein können.

11. Verwendung von wasseremulgierbaren Polyisocyanaten erhalten nach einem der vorstehenden Verfahren zur Herstellung von Polyurethanen und Polyurethanlacken, in Lacken zur Beschichtung von Innen- oder Außenbeschichtungen, von Gebäudeteilen, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Fenstern, Türen, Parkett, Can-Coating und Coil-Coating, insbesondere für Beschichtungen auf (Groß)Fahrzeugen und Flugzeugen und industriellen Anwendungen, Bodenbelägen, Parkett, Automobilklar-, -basis- und -decklacke(n), Primern und Füllern, insbesondere Im refinish-Bereich.

12. Verwendung von alkoxylierten Monoalkoholen (C) in der Herstellung von wasseremulgierbaren Polyisocyanaten aus (cyclo)aliphatischem Diisocyanat (A) sowie optional mindestens einem weiteren Diisocyanat (B) unter gleichzeitiger Bildung von isocyanuratgruppenhaltigen Polyisocyanaten in Gegenwart mindestens eines Katalysators.

13. Lacke, Klebstoffe und Dichtungsmasse, enthaltend mindestens ein wasseremulgierbares Polyisocyanat erhalten nach einem Verfahren gemäß einem der Ansprüche 1 bis 9.

## Claims

1. A process for preparing water-emulsifiable polyisocyanates comprising isocyanurate groups, wherein
(A) a (cyclo)aliphatic diisocyanate,
(B) if appropriate at least one further isocyanate and
(C) at least one alkoxylated monoalcohol
are simultaneously reacted with one another in the presence of at least one catalyst (D) which is able to accelerate the formation of isocyanurate groups from isocyanate groups, the reaction is stopped on reaching the desired conversion and the unreacted diisocyanate (A) and if appropriate (B) are separated off from the reaction mixture, with the amount of alkoxylated monoalcohol (C) after the end of the reaction and removal of unreacted (A) and if appropriate (B) being at least 1.0 mol% based on the ratio of hydroxy groups to the sum of all NCO groups from the components (A) and (B).

2. The process according to claim 1, wherein diisocyanate (A) is selected from the group consisting of hexamethylene 1,6-diisocyanate (HDI), isophorone diisocyanate (IPDI) 4,4'- and 2,4'-di(isocyanatocyclohexyl)methane.

3. The process according to claim 1, wherein no diisocyanate (B) is present.

4. The process according to any of the preceding claims, wherein component (C) is a polyether alcohol of the formula
R¹-O-[-Xᵢ-]ₖ-H
where
R¹ is C₁-C₂₀-alkyl, C₂-C₂₀-alkyl which may optionally be interrupted by one or more oxygen and/or sulfur atoms and/or one or more substituted or unsubstituted imino groups, C₆-C₁₂-aryl, C₅-C₁₂-cycloalkyl or a five- or six-membered, oxygen-, nitrogen- and/or sulfur-comprising heterocycle,
k is an integer from 5 to 40, preferably from 7 to 20 and particularly preferably from 10 to 15, and
each Xᵢ for i = 1 to k can be selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- and -CHPh-CH₂-O-, preferably from the group consisting of -CH₂-CH₂-O-, -CH₂-CH(CH₃)-O- and -CH(CH₃)-CH₂-O- and particularly preferably -CH₂-CH₂-O-,
where Ph is phenyl and Vin is vinyl.

5. The process according to claim 4, wherein R¹ is selected from the group consisting of methyl, ethyl, isopropyl, n-propyl, n-butyl, isobutyl, sec-butyl and tert-butyl.

6. The process according to any of the preceding claims, wherein the catalyst (D) is a quaternary ammonium salt of the formula 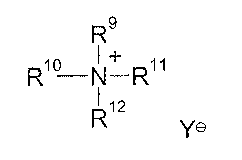 where
Y^{e} = carboxylate (R¹³COO⁻), fluoride (F-), carbonate (R¹³O(CO)O⁻) or hydroxide (OH⁻),
where
R⁹ to R¹² are identical or different alkyl groups which have from 1 to 20 carbon atoms and may optionally be substituted by hydroxyl or phenyl groups and R¹³ is hydrogen, C₁-C₂₀-alkyl, C₆-C₁₂-aryl or C₇-C₂₀-arylalkyl, each of which may optionally be substituted.

7. The process according to claim 6, wherein the radicals R⁹ to R¹² are selected independently from the group consisting of methyl, ethyl and n-butyl and R¹² can additionally be benzyl, 2-hydroxyethyl or 2-hydroxypropyl.

8. The process according to any of the preceding claims, wherein the catalyst (D) is deactivated by means of a deactivating agent selected from the group consisting of inorganic acids, carboxylic acid halides, sulfonic acids, sulfonic esters, m-chloroperbenzoic acid, dialkyl phosphates and compounds comprising carbamate groups.

9. The process according to any of claims 1 to 7, wherein the catalyst (D) is deactivated by heating to temperatures above 90°C.

10. The use of water-emulsifiable polyisocyanates obtained by one of the above processes for producing polyurethanes and polyurethane surface coatings, for one-component, two-component, radiation-curable or powder coating systems, and in coating compositions for coating wood, wood veneer, paper, paperboard, card, film, textile, leather, nonwoven, plastic surfaces, glass, ceramic, mineral building materials and metals, each of which may optionally be precoated or pretreated.

11. The use of water-emulsifiable polyisocyanates obtained by one of the above processes for producing polyurethanes and polyurethane coating compositions, in coating compositions for coating interior or exterior coatings, parts of buildings, decorative coatings, bridges, buildings, electricity pylons, tanks, containers, pipelines, power stations, chemical plants, ships, cranes, posts, sheet piling, valves, pipes, fittings, flanges, couplings, halls, roofs and structural steel, windows, doors, parquet, can coating and coil coating, in particular for coatings on (large) vehicles and aircraft and industrial applications, floor coverings, clear varnishes, undercoats and topcoats for automobiles, primers and fillers, in particular in the refinish sector.

12. The use of alkoxylated monoalcohols (C) in the preparation of water-emulsifiable polyisocyanates from (cyclo)aliphatic diisocyanate (A) and optionally at least one further diisocyanate (B) with simultaneous formation of polyisocyanates comprising isocyanurate groups in the presence of at least one catalyst.

13. A surface coating composition, adhesive or sealant comprising at least one water-emulsifiable polyisocyanate obtained by a process according to any of claims 1 to 9.

## Revendications

1. Procédé pour la préparation de polyisocyanates émulsifiables dans l'eau, contenant des groupes isocyanurate, **caractérisé en ce qu'**on transforme l'un avec l'autre
(A) un diisocyanate (cyclo)aliphatique,
(B) le cas échéant au moins un autre isocyanate et
(C) au moins un monoalcool alcoxylé
simultanément en présence d'au moins un catalyseur (D), qui permet d'accélérer la formation de groupes isocyanurate à partir de groupes isocyanate, on arrête la transformation lorsqu'on atteint la conversion souhaitée et on sépare le diisocyanate (A) ainsi que le cas échéant (B) non transformés du mélange réactionnel, où la quantité de monoalcool alcoxylé (C) après la fin de la transformation et de la séparation de (A) ainsi que le cas échéant de (B) non transformés est d'au moins 1,0% en mole par rapport aux groupes hydroxy par rapport à la somme de tous les groupes NCO des composants (A) et (B).

2. Procédé selon la revendication 1, **caractérisé en ce que** le diisocyanate (A) est choisi dans le groupe constitué par le 1,6-hexaméthylènediisocyanate (HDI), l'isophoronediisocyanate (IPDI), le 4,4'-di(isocyanatocyclohexyl)méthane et le 2,4'-di(isocyanatocyclohexyl)méthane.

3. Procédé selon la revendication 1, **caractérisé en ce qu'**il n'y a pas de diisocyanate (B).

4. Procédé selon l'une quelconque des revendications précédentes, **caractérisé en ce qu'**il s'agit, pour le composant (C), d'un polyétheralcool de formule
R¹-O-[-Xᵢ-]ₖ-H
où
R¹ signifie C₁-C₂₀-alkyle ; C₂-C₂₀-alkyle, C₆-C₁₂-aryle, C₈-C₁₂-cycloalkyle le cas échéant interrompu par un ou plusieurs atomes d'oxygène et/ou de soufre et/ou un ou plusieurs groupes imino substitués ou non substitués ; ou un hétérocycle de cinq ou six chaînons, présentant des atomes d'oxygène, d'azote et/ou de soufre,
k représente un nombre entier de 5 à 40, de préférence de 7 à 20 et de manière particulièrement préférée de 10 à 15 et
chaque Xᵢ pour i = 1 à k, peut être choisi indépendamment l'un de l'autre dans le groupe formé par -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- et -CHPh-CH₂-O-, de préférence dans le groupe formé par -CH₂-CH₂-O-, -CH₂-CH(CH₃)-O- et -CH(CH₃)-CH₂-O-, et est de manière particulièrement préférée -CH₂-CH₂-O-, où Ph représente phényle et Vin représente vinyle.

5. Procédé selon la revendication 4, **caractérisé en ce que** R¹ est choisi dans le groupe constitué par méthyle, éthyle, iso-propyle, n-propyle, n-butyle, iso-butyle, sec-butyle et tert-butyle.

6. Procédé selon l'une quelconque des revendications précédentes, **caractérisé en ce qu'**il s'agit, pour le catalyseur (D) d'un sel d'ammonium quaternaire de formule 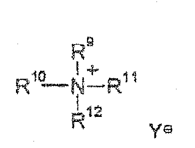 avec
Y^{e}= carboxylate (R¹³COO⁻), fluorure (F⁻), carbonate (R¹³O(CO)O⁻) ou hydroxyde (OH⁻),
où
R⁹ à R¹² représentent des groupes alkyle identiques ou différents comprenant 1 à 20 atomes de carbone, qui sont le cas échéant substitués par des groupes hydroxyle ou phényle et
R¹³ signifie hydrogène, C₁ à C₂₀-alkyle, C₆ à C₁₂-aryle ou C₇ à C₂₀-arylalkyle, qui peut à chaque fois éventuellement être substitué.

7. Procédé selon la revendication 6, **caractérisé en ce que** les radicaux R⁹ à R¹² sont choisis, indépendamment l'un de l'autre, dans le groupe constitué par méthyle, éthyle et n-butyle et R¹² peut en outre signifier benzyle, 2-hydroxyéthyle et 2-hydroxypropyle.

8. Procédé selon l'une quelconque des revendications précédentes, **caractérisé en ce que** le catalyseur (D) est désactivé avec un agent de désactivation choisi dans le groupe constitué par les acides inorganiques, les halogénures d'acide carboxylique, les acides sulfoniques, les esters d'acide sulfonique, l'acide m-chloroperbenzoïque, les dialkylphosphates et les composés contenant des groupes carbamate.

9. Procédé selon l'une quelconque des revendications 1 à 7, **caractérisé en ce que** le catalyseur (D) est désactivé par chauffage à des températures supérieures à 90°C.

10. Utilisation de polyisocyanates émulsifiables dans l'eau, obtenus selon l'un des procédés précédents pour la préparation de polyuréthanes et de laques de polyuréthane, pour des systèmes de revêtement de laque en poudre durcissables par rayonnement à un composant ou à deux composants et dans des laques pour le revêtement de bois, de placage en bois, de papier, de carton gaufré, de carton, de feuille, de textile, de cuir, de non-tissé, de surfaces en matériau synthétique, de verre, de céramique, de matériaux de construction minéraux et de métaux, qui peuvent à chaque fois éventuellement être prérevêtus ou prétraités.

11. Utilisation de polyisocyanates émulsifiables dans l'eau obtenus selon l'un des procédés précédents pour la préparation de polyuréthane et de laques de polyuréthane, dans des laques pour le revêtement de revêtements internes ou externes, de parties de bâtiments, de laquages de décoration, de ponts, de bâtiments, de poteaux électriques, de citernes, de conteneurs, de pipelines, de centrales électriques, d'installations chimiques, de bateaux, de grues, de poteaux, de cloisons, de robinetteries, de tuyaux, de raccords, de brides, d'accouplements, de halls, de toits et d'acier de construction, de fenêtres, de portes, de parquet, de revêtements de canettes et de bobines, en particulier pour des revêtements sur des voitures et des camions et des avions et des utilisations industrielles, des revêtements de sol, de laque(s) claire(s), de base et de recouvrement de voitures, d'apprêts et de charges, en particulier dans le domaine des retouches.

12. Utilisation de monoalcools alcoxylés (C) dans la préparation de polyisocyanates émulsifiables dans l'eau constitués de diisocyanate (cyclo)aliphatique (A) ainsi qu'éventuellement d'au moins un autre diisocyanate (B) avec formation simultanée de polyisocyanates contenant des groupes isocyanurate en présence d'au moins un catalyseur.

13. Laques, adhésifs et masses d'étanchéité, contenant au moins un polyisocyanate émulsifiable dans l'eau, obtenu selon un procédé selon l'une quelconque des revendications 1 à 9.
